# EUROPEAN PATENT SPECIFICATION

(11) **EP 0 412 662 B1**
(45) Date of publication and mention of the grant of the patent: **15.02.1995**
(21) Application number: 90307682.6
(22) Date of filing: 13.07.1990
(51) Int. Cl.: F16F 13/00

(54) **Vibration-damping mounting**
Schwingungsdämpfendes Lager
Manchon de support antivibratoire

(30) Priority: 14.07.1989 JP 182116/89
(43) Date of publication of application: 13.02.1991
(73) Proprietor: NISSAN MOTOR CO., LTD., Yokohama City (JP); Bridgestone Corporation, Tokyo (JP)
(72) Inventor: Ishiyama, Tatsuro, Totsuka-ku, Yokohama City (JP); Tabata, Toshiyuki, Sagamihara City (JP)
(74) Representative: Milhench, Howard Leslie

(56) References cited:
- GB-A- 2 207 214
- US-A- 4 728 086

## Description

### Field of the Invention

The present invention relates generally to vibration-damping mountings and particularly, though not exclusively, concerns fluid-filled vibration-damping mounts such as are used to support power units, cabs and/or body structures on vehicle chassis and the like.

### Background of the Invention

JP-A-63-318339 discloses a so-called bush type of vibration damping mount which is used to support engines, cabs and/or body structures on vehicle chassis and wherein inner and outer generally cylindrical structural members are supportingly connected to each other by way of an elastomeric body. An expansion chamber is defined between the inner member and the elastomeric body and a working chamber is defined between the elastomeric body and the outer member. The working and expansion chambers are fluidly interconnected by a restricted passage so that vibrations applied to the bush will be attenuated by flow of working fluid back and forth between the two chambers. The elastomeric body is vulcanized to the inner member together with a rigid insert member having a recess defining the restricted passage and communicating at both its ends with a fluid chamber defining recess formed in the elastomeric body. The combination of elastomeric body, inner member and insert member is inserted into the outer member which has an elastomeric layer vulcanized to its inner periphery over a predetermined partial portion thereof.

In order to ensure that the restricted passage and the fluid chamber are completely filled with working fluid and that all air is excluded, it has been the practice to assemble the inner and outer members while the components are totally immersed in working fluid. The outer member is then subjected to external compression so as to fix the two parts together into a single unit. However, a problem has been encountered on account of the fact that an air chamber which is defined between a portion of the elastomeric layer which is not vulcanized to the outer member and the outer member itself, communicates with the ambient atmosphere by way of only a single relatively small diameter opening as also described in US 4,728,086. During the immersed assembly, this air chamber becomes filled with working fluid which must be drained therefrom. However, since there is only a single small opening into the air chamber, the drainage of the same takes a long time and involves troublesome operations wherein each unit must be tilted and turned through various angles to induce draining. In fact total removal of working fluid from the air chamber is impossible to achieve.

To overcome this problem it has been proposed to provide a relatively large window type opening into the air chamber. This has successfully overcome the draining problem and enables the ready cleaning of the air chamber, but has in turn given rise to another problem in that when the assembled bush is to be force fitted into a suitable section of a mounting bracket, a relatively large force needs to be applied to one end of the device, generally along the axis of the outer cylindrical member, in order to force it all the way home. However, the provision of the enlarged window reduces the structural strength of the outer member to such a degree that during the force fitting process, buckling or otherwise undesired distortion of the outer member tends to occur. Needless to say, such distortion can require that the unit be removed from the bracket and replaced with a new one. This of course leads to highly undesired increases in lost time and production costs.

### Summary of the Invention

In order to overcome the abovementioned problems the present invention provides a vibration-damping mounting wherein, in order to improve the structural strength of the outer housing of the mounting against deformation when the mounting is force fitted into a receptacle in a mounting bracket, an opening, which is formed in the outer housing and which facilitates the draining of superfluous working fluid after an assembly process which is carried out with the mounting totally immersed in the fluid, is reinforced by a bridge portion which spans the opening and extends in the direction in which forces are generated during the force fitting.

More specifically, according to the present invention there is provided a vibration damping mounting comprising first and second annular members arranged one within the other with respective axes of the two members generally parallel and with the two members operatively interconnected by means of an elastomeric body, and wherein first and second fluid filled chambers are provided in said mounting and communicate with each other via a flow restricting passageway for damping vibrations arising in use of the mounting, and a diaphragm is provided for accommodating the expansion and contraction of said fluid filled chambers that accompanies said vibrations, said diaphragm defining an air chamber between itself and a portion of the outer one of said first and second members and an opening being provided in such portion for venting said air chamber, characterized in that the opening is of a size such as to enable ready drainage of fluid from said air chamber when the mounting is assembled under fluid immersion for filling the fluid filled chambers, and reinforcing means are provided which bridges said opening generally in a direction parallel to said axes for reinforcing said opening against deformation when, during assembly of the mounting, the vibration damping mounting is force fitted into a connection member.

In addition, the present invention provides a mounting structure comprising a mounting bracket having a portion into which a vibration-damping mounting can be force fitted, and a mounting as hereinabove defined force fitted into said portion of the mounting bracket.

Further features of the present invention are set forth in the appended claims and include the provision of a protective layer on the inner surface of the reinforcing means and arranged to prevent the diaphragm from directly contacting the reinforcing means and undergoing unnecessary abrasion, and provision of the reinforcing means as a non-integral part of the outer member and fixedly secured in place by bonding or the like. Furthermore, one or more air holes can be formed in the reinforcing means and arranged to co-operate with a corresponding hole formed in the bracket into which the bush is fitted, and the inboard end of the air hole can be reduced in diameter to prevent the diaphragm from bulging thereinto upon contact.

The abovementioned and other features, aspects and advantages of the present invention will become apparent to those possessed of the relevant skills from consideration of the following detailed description of exemplary embodiments given with reference to the accompanying drawings. In particular it will be appreciated that the mounting of the present invention features improved rigidity in the face of applied forces, thereby overcoming the loss of structural rigidity problem which has tended to plague the prior art arrangements, and is readily produced.

### Brief Description of the Drawings

Fig. 1 is a sectional side elevation view of a bush according to a first embodiment of the present invention as taken along section line I-I of Fig. 2;
Fig. 2 is a sectional front elevation view as taken along section line II-II of Fig. 1;
Fig. 3 is an exploded perspective view showing the constructional features of the first embodiment;
Fig. 4 is a side elevation view of the first embodiment as seen along the line IV-IV of Fig. 5;
Fig. 5 is a sectional side elevation view as taken along section line V-V of Fig. 6 and shows a variant of the first embodiment;
Fig. 6 is a sectional view as taken along section line VI-VI of Fig. 5;
Fig. 7 is a plan view showing the bush of Figs. 1 to 6 being force fitted into a mounting bracket;
Fig. 8 is a sectional side elevation view of a second embodiment of the present invention as taken along section line VIII-VIII of Fig. 9;
Fig. 9 is a sectional front elevation view as taken along section line IX-IX of Fig.8;
Fig. 10 is a sectional side elevation view of a third embodiment of the present invention as taken along section line X-X of Fig. 11.
Fig. 11 is a sectional front elevation view as taken along section line XI-XI of Fig. 10.
Figs. 12 and 13 are partial showings of a fourth embodiment of the present invention; and
Fig. 14 is a partial showing of a fifth embodiment of the present invention.

### Detailed Description of the Embodiments

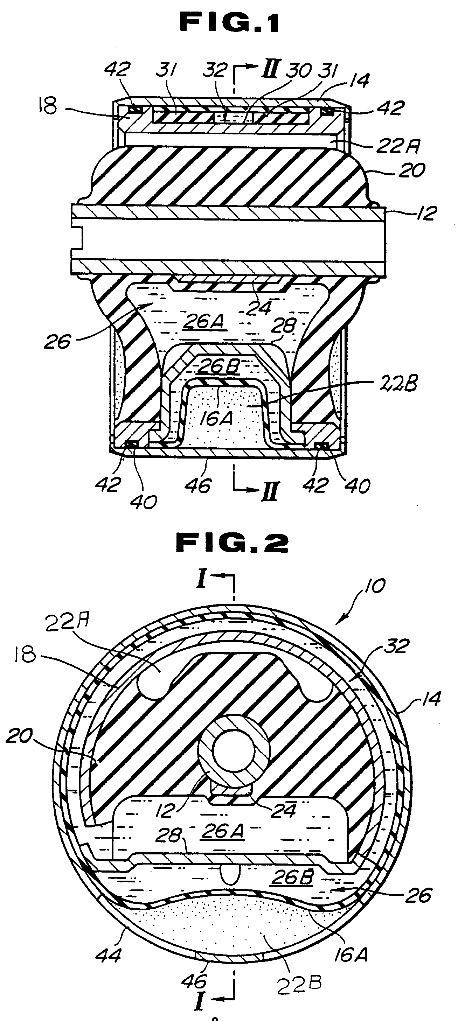

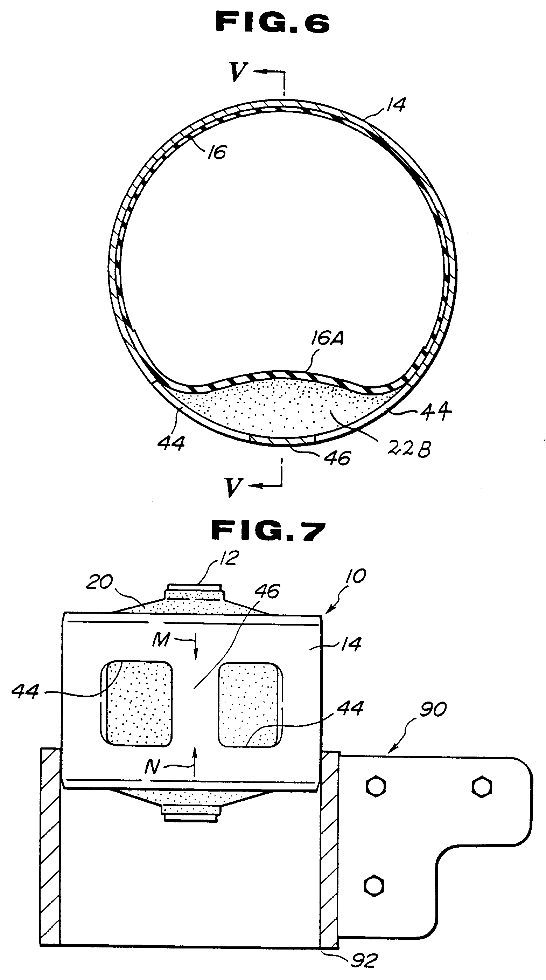

Figs. 1 to 7 shows a first embodiment of the present invention. In this arrangement a vibration-damping mounting bush 10 comprises generally cylindrical inner and outer tubular members 12 and 14 which are arranged so that the longitudinal axes thereof are generally parallel with one another. One of the inner and outer members 12, 14 is for connection to a source of vibration such as an internal combustion engine or a power unit, while the other is for connection to a vehicle chassis. For example, the outer member 14 may be arranged to be force fitted into a cylindrical connection member 92 which forms part of a bracket 90 (see Fig. 7) which in turn may be rigidly connected to the vehicle chassis.

An elastomeric layer 16 and a rigid annular intermediate member or insert 18 are arranged within outer member 14 as shown. The elastomeric layer 16 is vulcanized to a selected portion only of the inner periphery of the outer member 14. The annular insert 18 and the inner member 12 are connected by an elastomeric body 20. A metal insert 24 is rigidly connected to a predetermined portion of the lower surface of the inner member 12 and extends in the axial direction thereof. This insert 24 juts out from the inner member and acts as a stop.

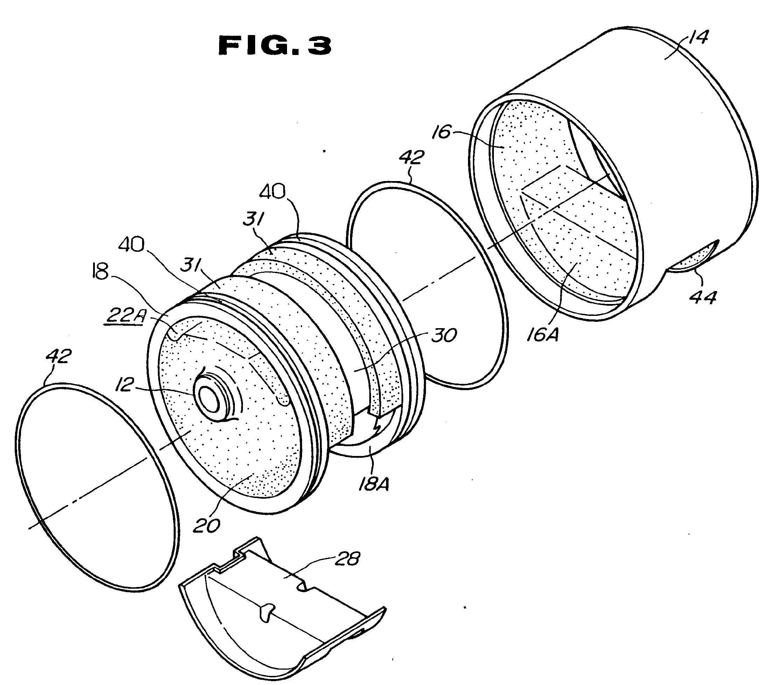

An axially extending air space 22A is defined between a portion of the annular insert 18 and the elastomeric body 20. This air space 22A is formed so as to be located diametrically opposite the stop 24 and serves to controllably reduce the compressive force which can be exerted by the elastomeric body in that direction. A fluid chamber 26 is defined within the elastomeric member 20 at a location diametrically opposite the air space 22A. This working chamber is filled with water, oil or a suitable working fluid. In the present embodiment the fluid chamber 26 is defined by moulding a radially extending blind recess in the elastomeric body 20. A partition member 28 (best seen in Fig. 3) is disposed in the mouth of the recess as shown in order to close the same and partition the chamber into a working chamber 26A and an auxiliary expansion chamber 26B. As may best be appreciated from Figs. 1 and 3, the partition member 28 is disposed in a cut-out 18A formed in a central portion of the annular insert 18 and arranged to project into the chamber 26B. The cut-out 18A is formed with an L-shaped shoulder into which axially extending flange portions of the partition member 28 are received.

As shown in Fig. 3, the annular insert 18 is formed with a generally C-shaped recess 30 which is located at an axially mid section part of the insert. Elastomeric layers 31 are fixedly disposed along each side of the recess 30. As shown in Fig. 1, these layers 31 combine with the elastomeric layer 16 to define a restricted control passage 32 which fluidly connects the working and expansion chambers 26A and 26B.

The annular insert 18 is formed with two circumferential grooves 40 which receive O-rings 42. These rings improve the sealing of the passage 32.

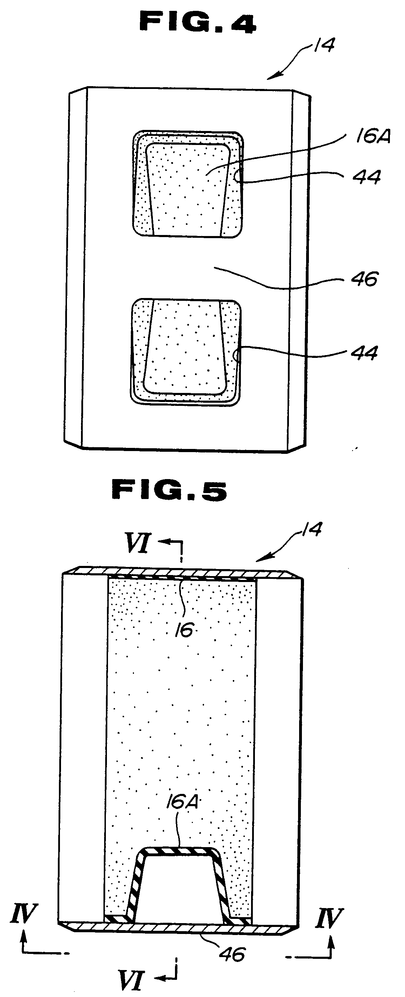

The elastomeric layer 16 has a portion which is not fixedly connected to the inner periphery of the outer member 14 and which acts as a diaphragm 16A at a location opposite the outboard face of the partition member 28. This diaphragm separates the expansion chamber 26B from a second air chamber 22B which is defined between the inner surface of the outer member 14 and the outboard face of the diaphragm. As may best be seen in Fig. 4, the outer member 14 is formed with two relatively large openings or cut-outs 44. These openings are separated by a reinforcing bridge portion 46 which extends in the axial direction of the outer member 14.

Figs. 5 and 6 show a variant of the first embodiment wherein the thickness of the elastomeric layer is increased in the region of the diaphragm 16A.

To assemble the above embodiment the inner member 12 and the annular insert 18 are first vulcanized to the elastomeric body 20. The recess in the elastomeric body which defines the fluid chamber 26, is oriented to face the cut-out portion 18A of the annular insert. As previously mentioned, a selected portion only of the elastomeric layer 16 is vulcanized to the inner periphery of the outer member 14. The non-vulcanized portion of the elastomeric layer 16 of course defines the diaphragm 16A. The two pieces are then immersed in a bath of working fluid and the main body comprised of elements 12, 20, 18, 31, 31, 42, 42, and 28 is inserted into the outer member 14 in such a manner as to ensure that fluid chamber 26 and the orifice passage 32 become completely filled with working fluid. Following such insertion the outer member 14 is subject to compression to fix the two bodies together into a single unit.

The inner diameter of the elastomeric layer 16 is selected to be greater than the inner diameter of the outer member 14 by about 2mm. This ensures that the diaphragm portion 16A exhibits an adequate amount of flexibility in both directions. The arrangement of the diaphragm also ensures that the so-called main body and outer member 14 can be readily manipulated by an operator relative to one another until the correct relationship is established for axial insertion. Accordingly, even though the assembly is carried out while immersed in the working fluid, it is easy to ensure that the recess formed in the elastomeric body faces the diaphragm in the desired manner.

It will be appreciated that as the assembly is carried out while the components are immersed in the working fluid, the working chamber 26A, expansion chamber 26B and interconnecting passage 32 are completely filled with fluid. After being removed from the fluid, any fluid remaining in the air chamber 22B defined between the diaphragm 61A and the outer member 14 can readily drain out and/or be removed without troublesome removal and cleaning efforts being required. Furthermore, since with the above technique accurate positioning of the outer member 14 with respect to the inner assembly is assured, any possibility of imperfect sealing of the passage 32 and/or leakage from the fluid chamber 26 is prevented.

As shown in Fig. 7 where a vibration damping arrangement of the nature disclosed above is being force fitted into a cylindrical connection member 92 which forms part of a bracket 90 which is to be rigidly connected to a vehicle chassis, the friction which develops between the outer member 14 and the cylindrical connection member 92 produces a reaction force N which acts against the force M which is being applied to the other end of the outer member 14. However, since the reinforcing bridge portion 46 exhibits a high rigidity in the direction in which the two forces act, any tendency for the outer member 14 to undergo deformation due to the provision of the openings 44 is negated. As a result of the outer member 14 being highly resistant to deformation during the force fitting process, the longevity and characteristics of the device are prevented from deterioration. Further, any tendency for the O rings 42 to deteriorate due to excessive displacement and/or pressure is negated.

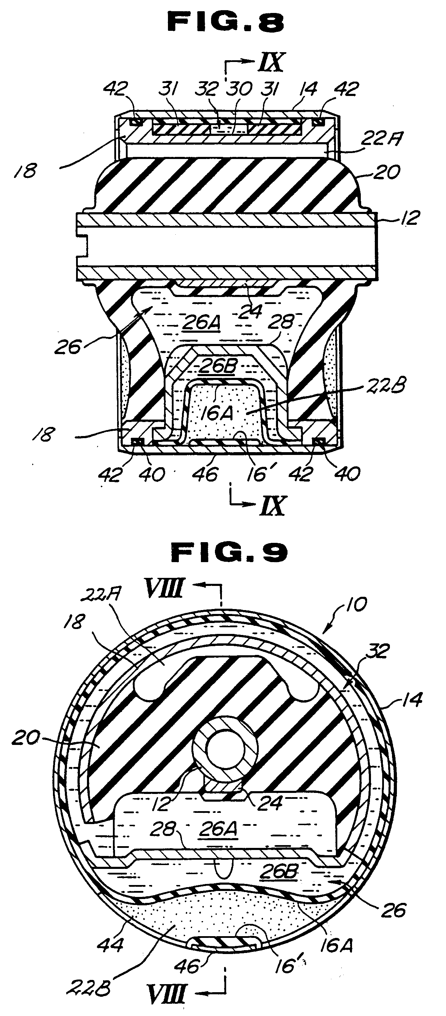

Figs. 8 and 9 show a second embodiment of the present invention which is generally the same as the embodiment above described except that a relatively small rectangular piece of elastomeric sheet 16′ is bonded or vulcanized to the inner wall of the bridge portion 46. This serves to protect the diaphragm 16A from undergoing abrasion or the like if it is forced into contact with the bridge portion 46. With this provision the longevity of the diaphragm 16A is improved. It should be noted that it is possible that the corners of the elastomeric sheet 16′ should have a radius of more than 10mm.

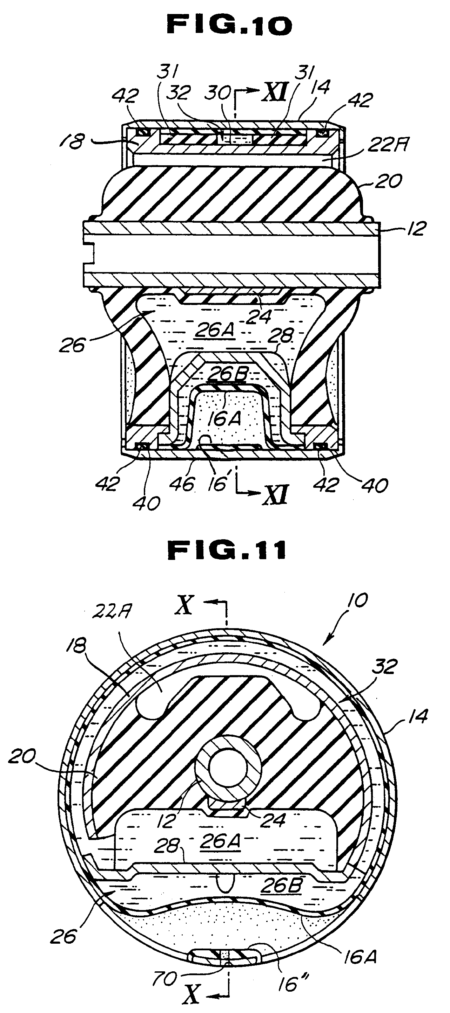

Figs. 10 and 11 show a third embodiment of the present invention which is similar to the embodiment of Figs. 8 and 9 except that a circular opening 70 is formed in the bridge portion 46. This opening 70 is provided so that when the bush is fully force fitted into the bracket, it can be aligned with a non-illustrated through hole (or holes) in the cylindrical connection member 92 in such a manner as to permit free fluid communication between the air chamber 22B and the ambient atmosphere. In this embodiment the protective elastomeric sheet 16˝ is provided with an opening which is coaxial with that formed in the bridge portion 46 and is arranged to wrap around the side edges of the bridge portion 46 in a manner which protects the diaphragm 16A from potentially sharp edges.

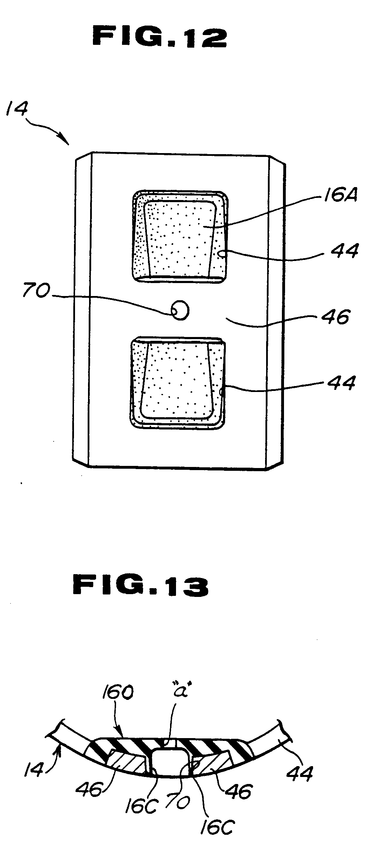

Figs. 12 and 13 show a fourth embodiment of the invention wherein the protective sheet 160 has a grommet-like configuration. In this embodiment the sheet is formed with a thin wall tubular portion 16C which is vulcanized to the wall of the opening 70 formed in the bridge portion. A relatively small substantially coaxial opening "a" is formed in the sheet so as to define a kind of stepped bore-like arrangement via which communication with the ambient atmosphere can be established. The diameter of the opening "a" is kept small to prevent the diaphragm 16A from bulging into the opening and undergoing localized deformation upon engaging the sheet. The sheet is arranged to wrap around the sides of the bridge portion 46.

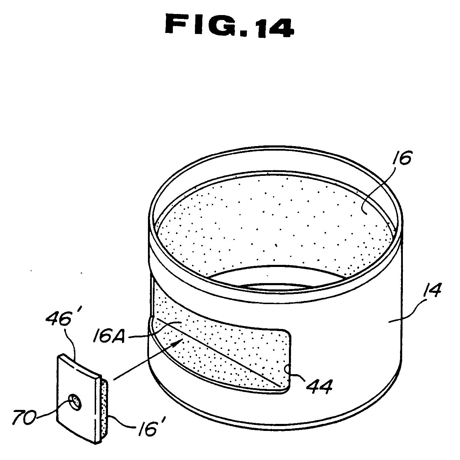

Finally, in the embodiment shown in Fig. 14 the bridge portion 47′ is formed separately (non-integrally) from the outer member 14, is provided with a protective sheet 16′ and is bonded in place prior to insertion of the bush into the mounting bracket. Of course it is possible with this embodiment to readily provide a plurality of reinforcing bridges if desired.

Having thus described the invention by reference to several embodiments, it is to be appreciated that variations and modification can be made (within the limits set by the claims) to the above-described types of bush without departure from the scope of the present invention. For example, in all of the described embodiments more than one reinforcing bridge portion may be provided if desired.

## Claims

1. A vibration damping mounting comprising first and second annular members (12, 14) arranged one within the other with respective axes of the two members generally parallel and with the two members operatively interconnected by means of an elastomeric body (20), and wherein first and second fluid filled chambers (26A, 26B) are provided in said mounting and communicate with each other via a flow restricting passageway (32) for damping vibrations arising in use of the mounting, and a diaphragm (16A) is provided for accommodating the expansion and contraction of said fluid filled chambers (26A, 26B) that accompanies said vibrations, said diaphragm (16A) defining an air chamber (22B) between itself and a portion of the outer one (14) of said first and second members (12, 14) and an opening (44) being provided in such portion for venting said air chamber (22B), characterized in that the opening (44) is of a size such as to enable ready drainage of fluid from said air chamber (22B) when the mounting is assembled under fluid immersion for filling the fluid filled chambers, and reinforcing means (46) are provided which bridges said opening (44) generally in a direction parallel to said axes for reinforcing said opening (44) against deformation when, during assembly of the mounting, the vibration damping mounting is force fitted into a connection member (92).

2. A mounting as claimed in claim 1 further comprising a protective layer (16′) formed on the inner surface of said reinforcing means (46), said layer (16′) being arranged to prevent said diaphragm (16A) from directly contacting said reinforcing means (46).

3. A mounting as claimed in claim 2 further comprising a through hole (70) which extends through said reinforcing means (46) and said protective layer (16′).

4. A mounting as claimed in claim 3 wherein said through hole (70) is stepped, the smaller diameter portion being defined in said protective layer (16′).

5. A mounting as claimed in claim 2 or 3 or 4 wherein said protective layer (16′) is formed to wrap around the side edges of said reinforcing means (46).

6. A mounting as claimed in any of the preceding claims wherein said reinforcing means (46) is formed separately from said outer member (14) and is fixedly attached thereto.

7. A mounting as claimed in any of the preceding claims wherein said reinforcing means (46) comprises a plurality of bridge members which extend across said opening in a direction generally parallel to the first and second axes.

8. A mounting as claimed in any of the preceding claims wherein said outer member (14) is generally cylindrical.

9. A mounting structure comprising:
a mounting bracket (90) having a portion (92) into which a vibration-damping mounting (10) can be force fitted; and
a vibration-damping mounting (10) as claimed in any preceding claim force fitted into said portion (92) of the mounting bracket (90).

## Patentansprüche

1. Schwingungsdämpfende Halterung, die ein erstes und ein zweites ringförmiges Element (12, 14) umfaßt, die ineinander angeordnet sind, wobei entsprechende Achsen der beiden Elemente im allgemeinen parallel sind und wobei die beiden Elemente mittels eines Elastomerkörpers (20) wirksam miteinander verbunden sind, und wobei eine erste und eine zweite mit Fluid gefüllte Kammer (26A, 26B) in der Halterung vorhanden sind und über einen drosselnden Durchlaß (32) miteinander verbunden sind, um die Schwingungen zu dämpfen, die beim Einsatz der Halterung auftreten, und wobei eine Membran (16A) vorhanden ist, die die Ausdehnung und das Zusammenziehen der mit Fluid gefüllten Kammern (26A, 26B) auffängt, das die Schwingungen begleitet, wobei die Membran (16A) eine Luftkammer (22B) zwischen sich selbst und einem Abschnitt des äußeren (14) des ersten und des zweiten Elementes (12, 14) bildet und eine Öffnung (44) zum Entlüften der Luftkammer (22B) in diesem Abschnitt vorhanden ist, **dadurch gekennzeichnet**, daß die Öffnung (44) so groß ist, daß leichter Abfluß von Fluid aus der Luftkammer (22B) möglich ist, wenn die Halterung in Fluid eingetaucht zusammengebaut wird, um die mit Fluid gefüllten Kammern zu füllen, und daß eine Verstärkungseinrichtung (46) vorhanden ist, die die Öffnung (44) im allgemeinen in einer Richtung parallel zu den Achsen überbrückt, um so die Öffnung (44) gegen Verformung zu verstärken, wenn bei der Montage der Halterung die schwingungsdämpfende Halterung in ein Verbindungselement (92) preßgepaßt wird.

2. Halterung nach Anspruch 1, die des weiteren eine Schutzschicht (16′) umfaßt, die an der Innenfläche der Verstärkungseinrichtung (46) ausgebildet ist, wobei die Schicht (16′) verhindert, daß die Membran (16A) direkt mit der Verstärkungseinrichtung (46) in Kontakt kommt.

3. Halterung nach Anspruch 2, die des weiteren eine Durchgangsöffnung (70) umfaßt, die durch die Verstärkungseinrichtung (46) und die Schutzschicht (16′) verläuft.

4. Halterung nach Anspruch 3, wobei die Durchgangsöffnung (70) abgesetzt ist, wobei der Abschnitt mit geringerem Durchmesser in der Schutzschicht (16′) ausgebildet ist.

5. Halterung nach Anspruch 2 oder 3 oder 4, wobei die Schutzschicht (16′) so geformt ist, daß sie die Seitenkanten der Verstärkungseinrichtung (46) umgibt.

6. Halterung nach einem der vorangehenden Ansprüche, wobei die Verstärkungseinrichtung (46) separat von dem äußeren Element (14) hergestellt wird und fest daran angebracht wird.

7. Halterung nach einem der vorangehenden Ansprüche, wobei die Verstärkungseinrichtung (46) eine Vielzahl von Stegelementen umfaßt, die sich quer über die Öffnung in einer Richtung im allgemeinen parallel zu der ersten und der zweiten Achse erstrecken.

8. Halterung nach einem der vorangehenden Ansprüche, wobei das äußere Element (14) im allgemeinen zylindrisch ist.

9. Halterungskonstruktion, die umfaßt:
einen Befestigungsarm (90), der einen Abschnitt (92) aufweist, in den eine schwingungsdämpfende Halterung (10) preßgepaßt werden kann; und
eine schwingungsdämpfende Halterung (10) nach einem der vorangehenden Ansprüche, die in den Abschnitt (92) des Befestigungsarms (90) preßgepaßt wird.

## Revendications

1. Support de montage amortisseur de vibrations, comprenant des premier et deuxième éléments annulaires (12, 14) disposés l'un à l'intérieur de l'autre, de telle sorte que les axes respectifs des deux éléments soient d'une manière générale parallèles et que les deux éléments soient reliés fonctionnellement au moyen d'un corps (20) en élastomère, et dans lequel des première et deuxième chambres (26A, 26B) remplies de fluide sont prévues dans ledit support de montage et communiquent entre elles par l'intermédiaire d'un passage d'étranglement d'écoulement (32) servant à amortir les vibrations qui se développent pendant l'utilisation du support de montage, et une membrane (16A) est prévue pour absorber la dilatation et la contraction desdites chambres (26A, 26B) remplies de fluide, qui accompagnent lesdites vibrations, ladite membrane (16A) définissant une chambre à air (22B) entre elle-même et une partie de celui (14) des premier et deuxième éléments (12, 14) qui est l'élément extérieur, et une ouverture (44) étant ménagée dans cette partie pour mettre ladite chambre à air (22B) à l'échappement, caractérisé en ce que l'ouverture (44) est d'une dimension telle qu'elle permette au fluide de s'écouler facilement de ladite chambre à air (22B) lorsque le support de montage est assemblé sous immersion dans un fluide pour le remplissage des chambres remplies de fluide, et il est prévu des moyens de renforcement (46) formant pont sur ladite ouverture (44) d'une manière générale dans une direction parallèle auxdits axes pour renforcer ladite ouverture (44) en l'empêchant de se déformer lorsque, pendant l'assemblage du support de montage, le support de montage amortisseur de vibrations est emmanché à force dans un élément d'assemblage (92).

2. Support de montage selon la revendication 1, comprenant en outre une couche protectrice (16′) formée sur la surface interne desdits moyens de renforcement (46), ladite couche (16′) étant agencée pour empêcher ladite membrane (16A) d'entrer en contact direct avec lesdits moyens de renforcement (46).

3. Support de montage selon la revendication 2, comprenant en outre un trou traversant (70) qui s'étend à travers lesdits moyens de renforcement (46) et ladite couche protectrice (16′).

4. Support de montage selon la revendication 3, dans lequel ledit trou traversant (70) est épaulé, la partie de plus petit diamètre étant définie dans ladite couche protectrice (16′).

5. Support de montage selon la revendication 2, 3 ou 4, dans lequel ladite couche protectrice (16′) est conformée pour envelopper les bords latéraux desdits moyens de renforcement (46).

6. Support de montage selon l'une quelconque des revendications précédentes, dans lequel lesdits moyens de renforcement (46) sont formés séparément dudit élément extérieur (14) et y sont fixés rigidement.

7. Support de montage selon l'une quelconque des revendications précédentes, dans lequel lesdits moyens de renforcement (46) comprennent plusieurs éléments formant pont qui s'étendent en travers de ladite ouverture dans une direction d'une manière générale parallèle aux premier et deuxième axes.

8. Support de montage selon l'une quelconque des revendications précédentes, dans lequel ledit élément extérieur (14) est d'une manière générale cylindrique.

9. Structure de montage comprenant :
une ferrure de montage (90) ayant une partie (92) dans laquelle un support de montage amortisseur de vibrations (10) peut être emmanché à force ; et
un support de montage amortisseur de vibrations (10) selon l'une quelconque des revendications précédentes, emmanché à force dans ladite partie (92) de la ferrure de montage (90).
